# EUROPEAN PATENT APPLICATION

(11) **EP 4 049 815 A1**
(43) Date of publication of application: **31.08.2022**
(21) Application number: 22158122.6
(22) Date of filing: 23.02.2022
(51) Int. Cl.: B26B 13/20

(54) **FINGER GRIP FOR SHEARS**

(30) Priority: 25.02.2021 US 202117184935; 17.02.2022 US 202217674735
(71) Applicant: Panosian, Michael H., Irvine, CA 92618 (US); Keeler, Joshua M., Irvine, CA 92618 (US)
(72) Inventor: Panosian, Michael H., Irvine, CA 92618 (US); Keeler, Joshua M., Irvine, CA 92618 (US)
(74) Representative: AWA Sweden AB

(57) **Abstract**

A shears 10 upper finger grip 12b has a lower substantially flat inner surface 12d arranged in a transverse plane substantially normal to a cutting plane CP and dimensioned and configured to enable substantially full insertion of a thumb metacarpal bone from a right lateral side and for receiving the ball of the thumb to enable the thumb to be moved to a position on a left lateral side to an orientation substantially parallel to the cutting plane and to position the hand's thenar eminence TE into abutment against the flat inner surface while positioning at least exterior right lateral portions 12e of the upper finger grip in abutment against the palm beyond the hand's thenar crease TC and into the region of at least one of the hand's palmar creases PC1, PC2 to enable the thenar eminence and palm of the hand to oppose the forces applied by the fingers acting on the lower finger grip 14b.

## Description

### CROSS-REFERENCE(S) TO RELATED APPLICATION(S)

The present application is a Divisional of, and claims the benefit of the filing date of US Application No. 17/184,935, filed on 25-February-2021, entitled " FINGER GRIP FOR SHEARS," the contents of which are hereby expressly incorporated by reference in their entirety, under 35 U.S.C. § 120.

### BACKGROUND OF THE INVENTION

### 1. Field of the Invention

The present invention generally relates to hand operated cutting tools and, more specifically, to a finger gripping structure for cutting tools such as shears, snips and scissors.

### 2. Description of the Prior Art

Many hand-operated tools, such as scissors, shears and snips, have been proposed over the years in numerous configurations to facilitate the cutting of various materials ranging from light or soft materials to heavy materials such as sheet-metal. While the goals of most of these cutting tools have been design to allow for the comfortable use of the tools, most designs frequently cause user stress, strain and fatigue.

While it is generally understood that the strengths of all the fingers of the hand are more or less the same or equal, gripping or squeezing the handles of scissors, shears or snips normally involves one finger, the thumb, acting on one upper finger grip while the remaining four fingers act on the other or opposing finger grip to counter the force applied by the thumb. The thumb, therefore, must apply a disproportionate force by one finger to counter the collective opposing forces applied by the remaining four fingers. This results in increased stresses on the flexor muscles of the thumb. Consequently, this results in user fatigue, especially with extended use and the cutting of heavier materials such as cardboard, sheet-metal and the like.

U.S. Patent 454,735 to Heinisch discloses a shears that includes a broad outwardly and rearwardly extending seat or rest that extends to the outside of the palm of the hand and upon which a portion of the hand rests when the shears are used. Extending from the seat or rest is an extension upon which the thumb and the ball of the thumb rest, the whole palm of the hand being utilized to sustain the weight of the body when operating the shears. However, the extended seat or rest continues to rely on the thumb for application of forces during cutting. Also, the shape of the extension and the seed arrest is convex forming one or more peaks that potentially apply one or more pressure points resulting in excessive points of stress and, with extended use, pain and fatigue to the user. A similar structure is disclosed in related U.S. Patent 760, 204.

U.S. Patent 968, 219 to Wheeler discloses a shears designed to be used for longer time and with less fatigue to the operator. The shears includes an oblique thumb loop that lies in a plane at an angle of 45° to the plane of the finger bow so that inserting the thumb into the bow in alignment with the wrist and after passing through the bow bears against the shank by offsetting the thumb bow. The power applied to operate the thumb bow is applied nearly transversely to the thumb and above the second joint of the thumb. While the orientation of the thumb bow renders the bow more ergonomic the force applied to counter or oppose forces of the remaining four fingers are still primarily supplied by the thumb.

U.S. Patent 4, 635, 363 to Chapin discloses hand-operated cutting tool that includes a ring having a central axis A offset from the central plane or axis B by an angle less than 45°. As with the previous shears, while more ergonomic than other designs, continues to rely on the flexing of the thumb to oppose the forces applied by the other fingers.

U.S. Published Patent Application 2011/0131813 to Lin discloses a grip structure for a pair of scissors. The upper grip portion for receiving the thumb is configured to support a portion of the base of the thumb and configured to receive the thumb at an oblique angle with respect to the blades, as in the previous designs. The design is primarily intended to provide improved stability during opening or closing of the scissors by avoiding undesired deflection of the two blades of the scissors and keeping the two blades in the best vertical state during the cutting process effectively improving the cutting quality and safety.

### SUMMARY OF THE INVENTION

Accordingly, it is an object of the invention to provide a cutting tool, such as scissors, snips or shears that overcomes the inherent disadvantages in most existing cutting tools.

It is another object of the invention to provide a cutting tool that is easy and convenient to use.

It is still another object of the invention to provide a cutting tool to enhance lever power for operating the tool and, at the same time, facilitate the operation and increase the comfort to the user.

It is yet another object of the invention to provide a cutting tool that enables a user to cut thicker or harder materials with less stress on the hand, and particularly the thumb.

It is a further object of the invention to provide a cutting tool of the type under discussion that is easy to manipulate.

It is still a further object of the invention to provide a cutting tool as aforementioned that can be used for longer periods of time and with less fatigue to the operator.

It is yet a further object of the invention to provide a cutting tool that is ergonomically designed that is not only comfortable to use but increases the precision and control over the cutting operation.

In order to achieve the above objects, as well as others that will become evident hereinafter, a gripping structure for a pair of scissors or shears in accordance with the invention comprises two levers pivotably connected at a pivot point and form substantially parallel blades at distal ends of said levers. The blades define a medial cutting plane and are pivotably movable about said pivot point between open and closed positions within said cutting plane and, in a closed position, define a line or longitudinal axis with said pivot point. Each lever is formed at a proximal end relative to said pivot point with a finger grip, a first finger grip being a superior or an upper finger grip formed above said line or axis and having a lower portion formed with a substantially flat inner surface closest to and extending longitudinally along a direction generally parallel to said line or axis in said closed position of said blades and arranged in a transverse plane substantially normal to said cutting plane. The upper finger grip is dimensioned and configured to enable substantially full insertion of a thumb metacarpal bone from a right lateral side through said upper finger grip for receiving the ball of the thumb to enable the thumb to be moved to a position on a left lateral side to an orientation substantially parallel to said cutting plane and to position the hand's thenar eminence into abutment against said generally flat inner surface of said first finger grip while positioning at least exterior right lateral portions of said loop in abutment or contact with the palm of the hand beyond the hand's thenar crease and into the region of at least one of the hand's palmar creases. A second finger grip, a lower finger grip, is positioned below said first finger grip and configured and dimensioned to be gripped by at least some of the other four fingers of the hand. In this way, the first finger grip enables the thenar eminence and palm of the hand to oppose the forces applied by the fingers acting on said second finger grip, and forces applied against the thenar eminence are uniformly applied against the thenar muscles and transferred to the hand's palmer surface to enable the thumb to guide the direction of cutting while minimally applying flexing or gripping forces in opposition to forces applied by the other fingers on said second finger grip to thereby eliminate or minimize stress or fatigue of the thumb's flexar muscles.

### BRIEF DESCRIPTION OF THE DRAWINGS

The above and other aspects, features and advantages of the present invention will be more apparent from the following description when taken in conjunction with the accompanying drawings, in which:
Fig. 1 is a left perspective view of a scissors or shears in accordance with the invention, shown in a fully closed condition;
Fig. 2 is a left lateral side view of the scissors or shears shown in Fig. 1, showing in phantom outline the positions of the fingers of the hand during normal use;
Fig. 3 is similar to Fig. 2 when the scissors or shears are in a partially open condition;
Fig. 4 is a top plan view of the scissors or shears shown in Figs. 1-3;
Fig. 5 is a bottom plan view of the scissors or shears shown in Figs. 1-4, showing in phantom outline the position of the hand during initial insertion of the thumb and prior to gripping of the handles;
Fig. 6 is an enlarged fragmented view, as viewed from the right lateral side to show details of the configuration of the upper finger grip;
Fig. 7 is a cross-sectional view of the upper finger grip shown in Fig. 6, taken along line 7-7;
Fig. 8 is a bottom plan view of the scissors or shears shown in the previous Figures, broken away to illustrate the lower configuration of the upper finger grip and the manner that it is arranged in relation to the thenar eminence and the palmer surfaces of the hand;
Fig. 9 is similar to Fig. 2 and shows another embodiment of a shears in which both finger grips are angularly offset from the axis to position both grips above the axis;
Fig. 10 is similar to Figs. 2 and 9 and shows still a further embodiment of a shears in which both finger grips are linearly offset from the axis to position both grips above the axis; and
Fig. 11 is a cross-sectional view of the finger grips shown in Fig. 2 taken along line 11-11.

### DETAILED DESCRIPTION

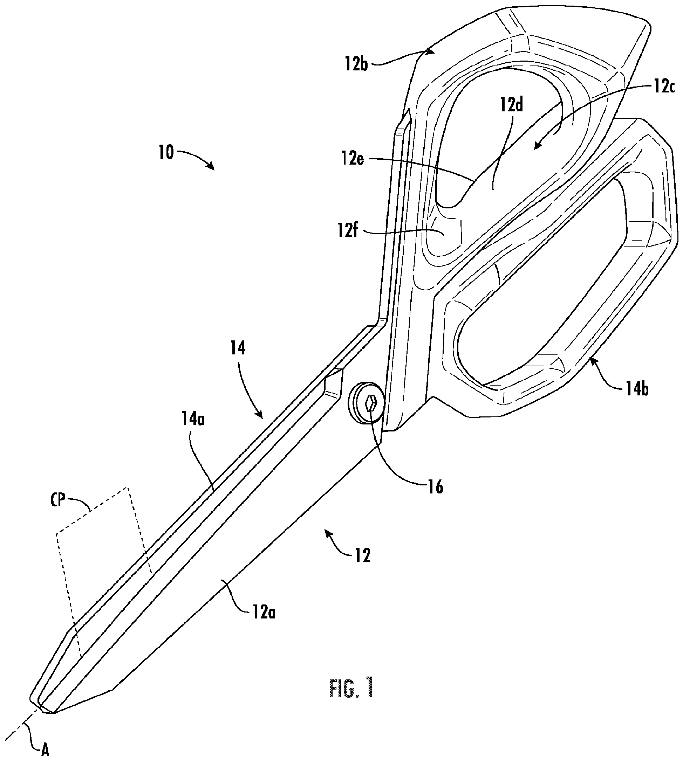

Referring now specifically to the Figures, in which identical or similar parts are designated by the same reference numerals throughout, and first referring to Fig. 1, a scissors, shears, snips or other like cutting instrument is generally designated by the reference 10. All such cutting tools will be collectively referred to herein as "shears".

The shears 10 includes two levers 12, 14 connected to each other at a pivot 16 forming a pivot point. The levers form substantially parallel blades 12a, 14a. The blades 12, 14 define a medial cutting plane CP and are pivotably movable about the pivot 16 between open and closed positions within the cutting plane. In a closed position, the blades 12, 14 define a line or longitudinal axis A with the pivot 16.

Each lever is formed at a proximal end relative to the pivot 16 with a finger grip. A first finger grip 12b is a superior or an upper finger grip formed above the line or axis A. The first or upper finger grip is formed above the line or axis A and has a lower portion 12c formed with a substantially flat inner surface 12d closest to and extending longitudinally along a direction generally parallel to the line or axis A when the blades are closed.

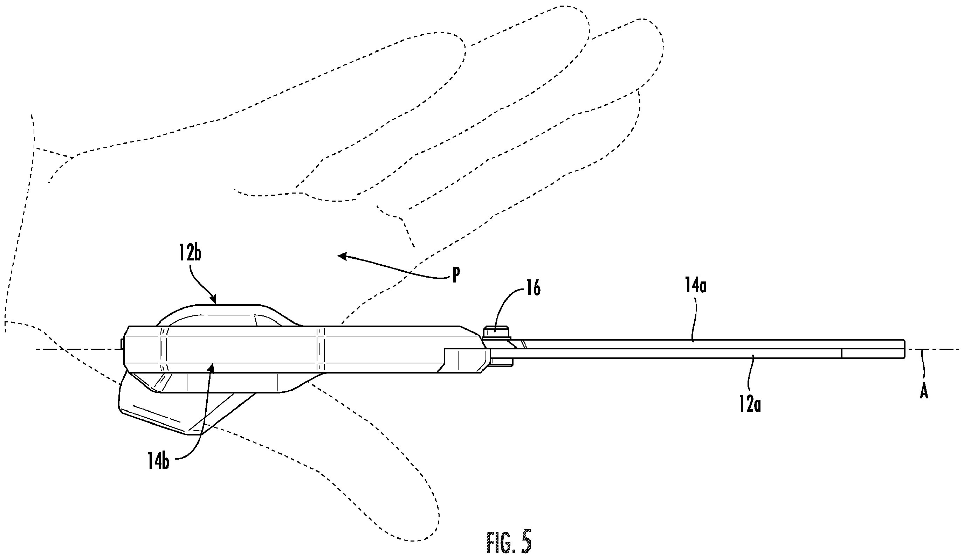

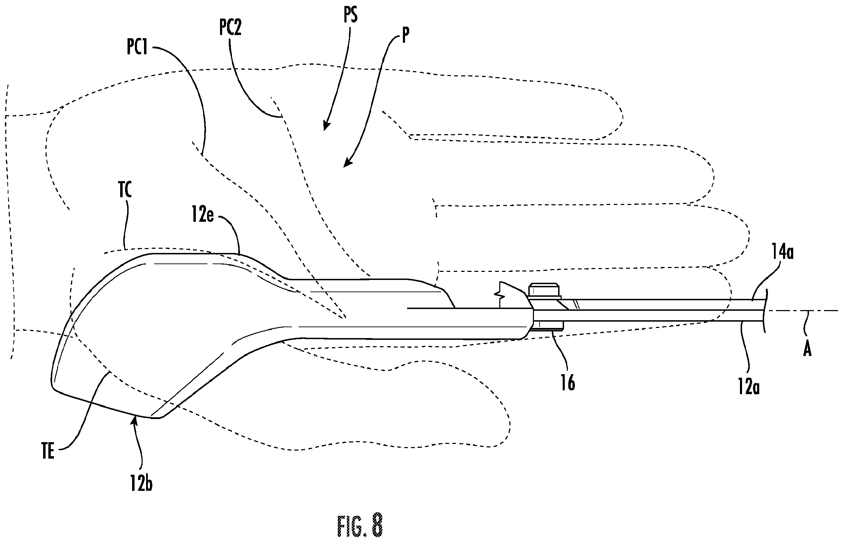

The first or upper finger grip 12b is dimensioned and configured to enable substantially full insertion of a thumb metacarpal bone from a right lateral side through the upper finger grip 12b for receiving the ball of the thumb or thenar eminence (TE), as best shown in Figs. 5 and 8 from a right lateral side through the finger grip 12(b) and for receiving the ball of the thumb to enable the thumb to be moved to a position on the left lateral side to an orientation substantially parallel to the cutting plane CP and to position the hands' thenar eminence TE into abutment against the generally flat inner surface 12d of the upper finger grip 12b while positioning at least the exterior right lateral portion 12e of the finger grip into abutment or contact with the palm P of the hand, as best shown in Fig. 8 beyond the hand's thenar crease TC and into the region of at least one of the hand's palmar creases PC1 and PC2.

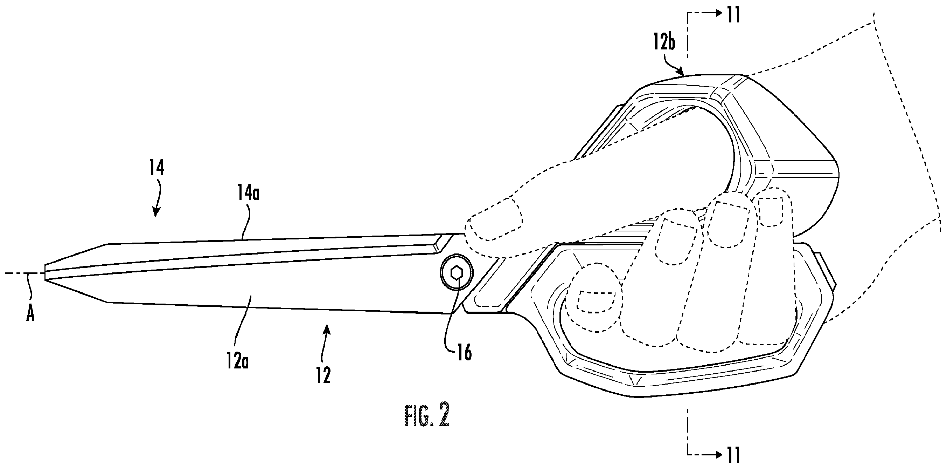

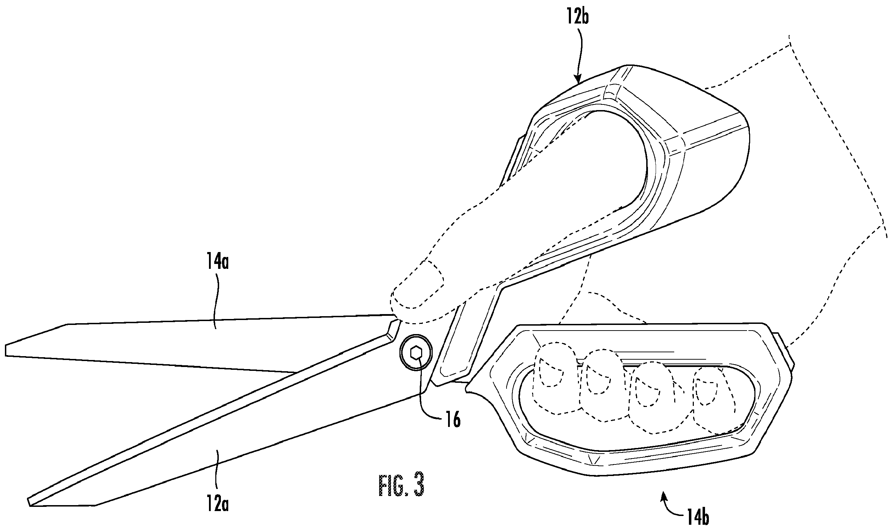

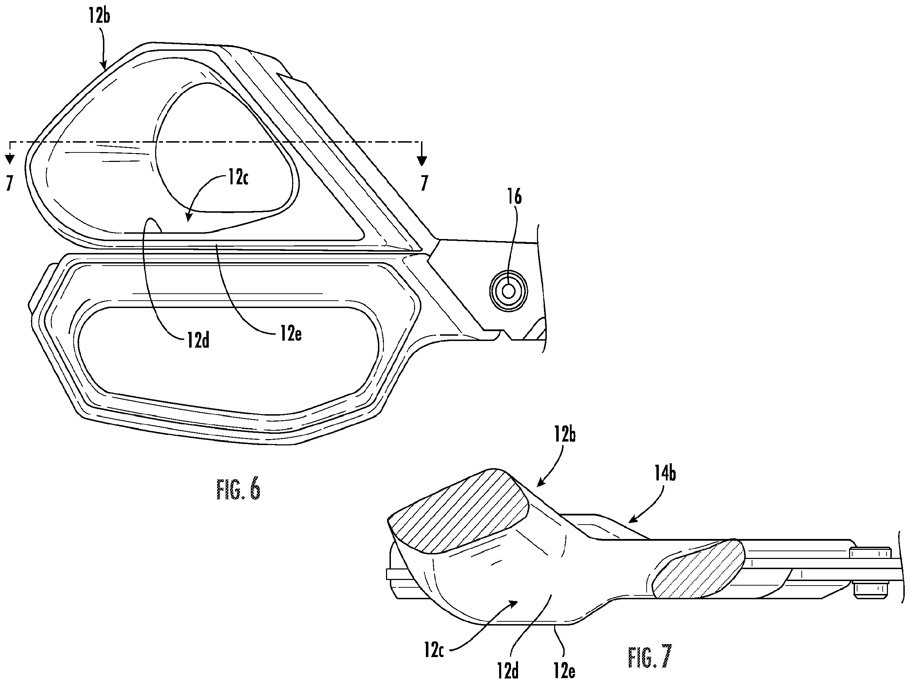

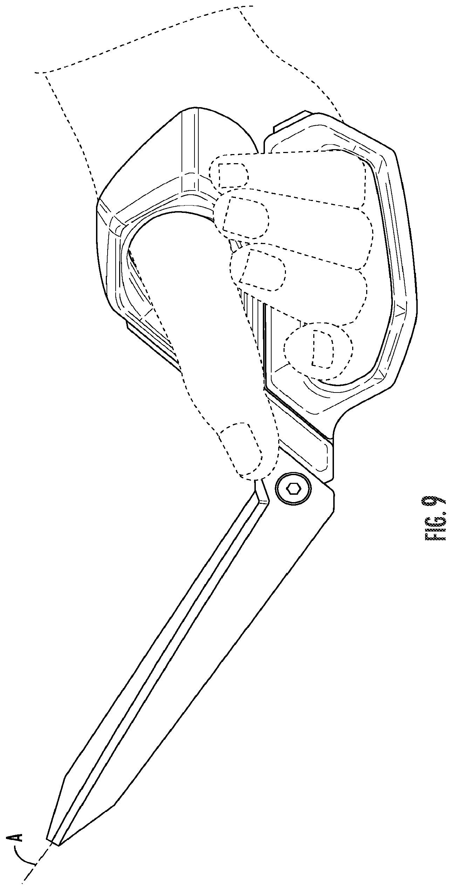

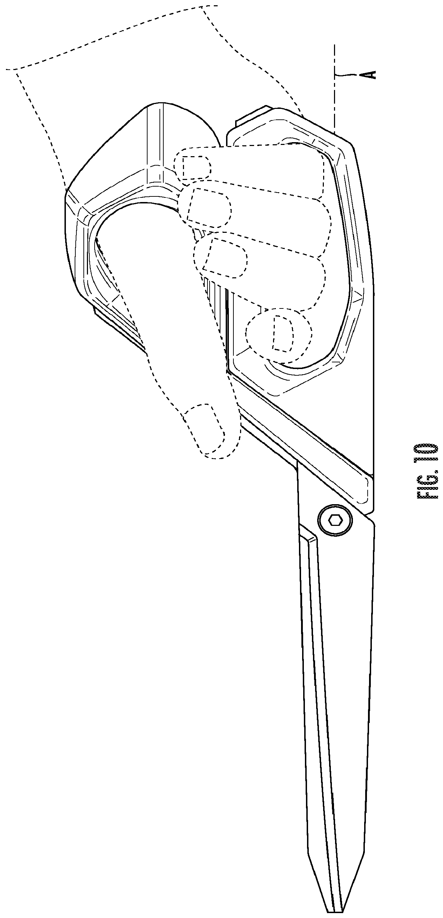

The second or lower finger grip 14b, in the embodiment shown in Figs. 1-8, is arranged below the line or axis A and is configured and dimensioned to be gripped by the other four fingers or at least some of the other four fingers of the hand as shown in Figs. 2 and 3. However, the positions of the finger grips relative to the axis A is not critical and can be angularly or linearly offset from the axis. See, for example, Fig. 9 in which both finger grips are angularly offset from the axis to position both finger grips above the axis, and Fig. 10 in which both finger grips are linearly offset from the axis to again position both finger grips above the axis. The offsets can also position the finger grips below the axis and can result from offsets opposite from the ones shown in Figs. 9 and 10, and can also include combinations of linear and angular offsets.

The first or upper finger grip 12b is configured as an annular loop preferably formed with a recessed curved surface 12f the at the leading or distal end that is a continuation of the flat inner surface 12d, on the left lateral side, to accommodate the thenar webspace or skin web between the thumb and the index finger, when the thumb is substantially aligned with the blades 12a, 14a.

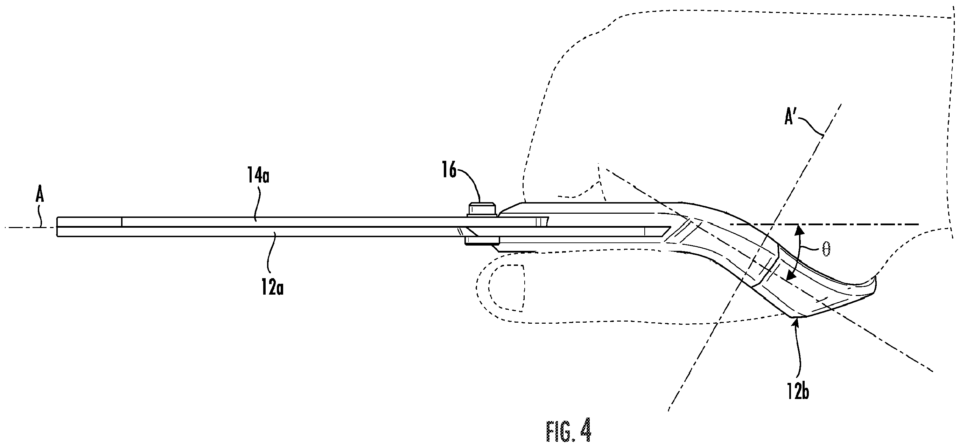

Referring to Fig. 4, the upper finger grip 12b defines a central axis A' that diverges or is angularly offset from the cutting plane CP or the axis A at an angle Θ that is within the range of 50°-60°. Preferably, the angle Θ is equal to approximately 55°.

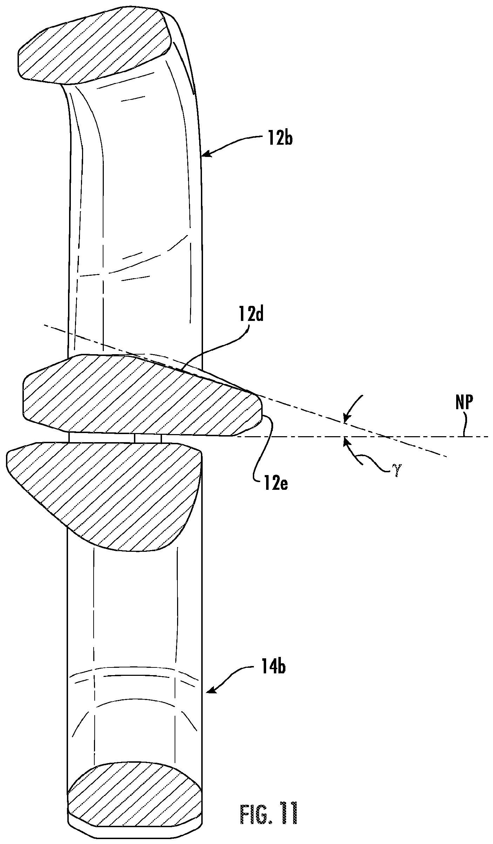

The inner surface 12d is substantially flat, as shown in Fig. 11, to distribute the forces uniformly across the thenar eminence or the ball of the thumb and the thenar muscles. Without having any meaningful curvature or peaks in this surface 12d force concentrations on the thenar muscles are avoided, preventing potentially significant pain to the user. Also, in order to render the tool more ergonomic and comfortable to use the flat surface 12d may be somewhat inclined upwardly from the right lateral side towards the left lateral side to conform to the shape of the hand while in gripping engagement with the upper finger grip 12b. The inclination of the flat surface is best shown in Fig. 11 where the surface is shown inclined downwardly from the left to the right side relative to a plane NP substantially normal to the cutting plane CP. The inclination angle γ is within the range of 10°-20° and, preferably within the range 15°-17°.

In preparation for use of the shears, referring to Fig. 5, the thumb is fully inserted into the upper finger grip 12b so that the thenar eminence TE rests upon the substantially flat surface 12d and the thumb can be moved to the position shown in Fig. 8 where the thumb is substantially aligned with the blades 12a, 14a. Once the fingers are flexed to gripping positions, the right exterior lateral portion or edge 12e is placed into abutment with the palmer surface PS, beyond the thenar crease TC and into contact with the palmar creases PC1 and/or PC2. Importantly, the thumb, once in the position shown in Fig. 3, serves to primarily stabilize and guide the direction of cutting while eliminating or substantially reducing the flexing forces applied by the thumb in opposition or to counter the squeezing forces of the other four fingers that act on the lower finger grip 14b, those forces being absorbed or countered by the palm of the hand. Thus, the thenar muscles do not need to flex during operation of the shears but can remain substantially stationary, substantially reducing stress and strain on the thumb. The design is not only ergonomic but renders the shears more comfortable and easy to use while avoiding fatigue especially with prolonged use or while cutting heavier materials.

While the shears 10 shown in Figs. 1-8 shows a shears in which the upper grip 12b is generally located above the axis A and the lower grip 14b is positioned below the axis the invention may be used with other configured shears, scissors or snips. Thus, referring to Figs. 9 and 10 other common configurations of shears are illustrated in which both the upper and lower grips are positioned above the axis A. In all cases the configuration aforementioned for the upper grip 12b is substantially the same.

The foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. Shears for reducing stress on a thumb of a user during operation of the shears,
comprising:
a first lever and a second lever pivotally connected to the first lever at a pivot, wherein each lever is pivotable from an open position to a closed position, a blade is formed on each lever, wherein the blades in the closed position define a longitudinal axis; and
a first finger grip formed on the first lever, and a second finger grip formed on the second lever, wherein the first finger grip comprises a substantially flat inner surface adapted to receive a thenar eminence of the thumb of the user, and the second finger grip defines a second inner surface adapted to receive at least one finger of the user, such that combined pressure of the thenar eminence against the substantially flat inner surface and the at least one finger against the second inner surface urges the first lever and the second lever to their corresponding closed positions;
wherein both the substantially flat inner surface and the second inner surface are positioned on a same side of the longitudinal axis.

2. The shears of claim 1 wherein the first finger grip defines a first opening adapted to allow the thumb to extend through the first opening such that the thenar surface of the thumb is positioned at the substantially flat inner surface during operation.

3. The shears of claim 2 wherein the first opening is formed by an annular loop of the first finger grip, and the substantially flat inner surface is formed on the annular loop.

4. The shears of claim 3 wherein the first finger grip further comprises an exterior right lateral portion which is adapted to abut against a palm of a hand of the user, beyond a thenar crease of the hand toward a palmar crease of the hand.

5. The shears of claim 2 wherein the first finger grip further comprises a lower portion, where the substantially flat inner surface is formed from the lower portion, and the second finger grip comprises a second inner surface, wherein the substantially flat inner surface and the second inner surface are generally parallel to one another when the first lever and the second lever are moved to their closed positions.

6. The shears of claim 3 wherein the first finger grip has a recessed curved surface adapted to receive a web of the hand between the thumb and an index finger during operation of the shears.

7. The shears of claim 2 wherein the closed position of the first lever and the closed position of the second lever are defined by abutment of the first finger grip against the second finger grip.

8. The shears of claim 2 wherein the opening allows for insertion of the metacarpal bone of the thumb through the opening.

9. The shears of claim 2 wherein the second finger grip defines a second opening adapted to allow at least one finger to extend through the second opening and be positioned on a second inner surface during operation of the shears.

10. The shears of claim 9 wherein a second inner surface is formed as part of a second annular loop.

11. The shears of claim 1 wherein the first finger grip extends from the longitudinal axis at an angle within a range of 50° to 60°.

12. The shears of claim 2 wherein the first finger grip further comprises a flat bottom surface, and the substantially flat inner surface of the first finger grip is inclined at an inclination angle with respect to the flat bottom surface.

13. The shears of claim 12 wherein the inclination angle is 10°-20°.

14. The shears of claim 13 wherein the inclination angle is 15°-17°.

15. Shears for reducing stress on a thumb of a user during operation of the shears, comprising:
a first lever and a second lever pivotally connected to the first lever at a pivot, wherein each lever is pivotable from an open position to a closed position, a blade is formed on each lever, wherein the blades in the closed position define a longitudinal axis;
a first finger grip formed on the first lever, and a second finger grip formed on the second lever, wherein the first finger grip comprises a substantially flat inner surface adapted to receive a thenar eminence of the thumb of the user, and the second finger grip defines a second inner surface adapted to receive at least one finger of the user, such that combined pressure of the thenar eminence against the substantially flat inner surface and the at least one finger against the second inner surface urges the first lever and the second lever to their corresponding closed positions;
wherein both the substantially flat inner surface and the second inner surface are positioned on a same side of the longitudinal axis; and
wherein the first finger grip further comprises a lower portion, where the substantially flat inner surface is formed from the lower portion, and the second finger grip comprises a second inner surface, wherein the substantially flat inner surface and the second inner surface are generally parallel to one another when the first lever and the second lever are moved to their closed positions.

16. The shears of claim 15 wherein the first finger grip defines a first opening adapted to allow the thumb to extend through the first opening such that the thenar surface of the thumb is positioned at the substantially flat inner surface during operation; and
the second finger grip defines a second opening adapted to allow at least one finger to extend through the second opening and be positioned on a second inner surface during operation of the shears.

17. The shears of claim 16 wherein the first opening is formed by an annular loop of the first finger grip, and the substantially flat inner surface is formed on the annular loop;
the first finger grip further comprises an exterior right lateral portion which is adapted to abut against a palm of a hand of the user, beyond a thenar crease of the hand toward a palmar crease of the hand;
the first finger grip further comprises a lower portion, where the substantially flat inner surface is formed from the lower portion, and the second finger grip comprises a second inner surface, wherein the substantially flat inner surface and the second inner surface are generally parallel to one another when the first lever and the second lever are moved to their closed positions; and
the first finger grip has a recessed curved surface adapted to receive a web of the hand between the thumb and an index finger during operation of the shears.

18. The shears of claim 17 wherein the second finger grip defines a second opening adapted to allow at least one finger to extend through the second opening and be positioned on a second inner surface during operation of the shears, and a second inner surface is formed as part of a second annular loop.

19. The shears of claim 17 wherein the first finger grip extends from the longitudinal axis at an angle within a range of 50° to 60°.

20. The shears of claim 17 wherein the first finger grip further comprises a flat bottom surface, and the substantially flat inner surface of the first finger grip is inclined at an inclination angle with respect to the flat bottom surface.
